# EUROPEAN PATENT APPLICATION

(11) **EP 4 542 268 A1**
(43) Date of publication of application: **23.04.2025**
(21) Application number: 22965492.6
(22) Date of filing: 16.11.2022
(51) Int. Cl.: G02B 5/128

(54) **ANTI-COUNTERFEITING REFLECTOR PLATE AND MANUFACTURING METHOD THEREFOR**

(71) Applicant: Nippon Carbide Industries (Hangzhou) Co., Ltd., Hangzhou, Zhejiang 311231 (CN)
(72) Inventor: JIANG, Jihui, Hangzhou, Zhejiang 311231 (CN); HAN, Jianjun, Hangzhou, Zhejiang 311231 (CN); CHEN, Yan, Hangzhou, Zhejiang 311231 (CN); XIAO, Yuetang, Hangzhou, Zhejiang 311231 (CN)
(74) Representative: Bjerkén Hynell KB
(86) International application number: PCT/CN2022/132344
(87) International publication number: WO 2024/103308

(57) **Abstract**

An anti-counterfeiting reflector plate and a manufacturing method therefor. The anti-counterfeiting reflector plate comprises: a surface protection layer (1); a clamping layer (2), which is located on a side surface of the surface protection layer (1); a focus forming layer (4), which is located on a side surface of the clamping layer (2); and a specular reflection layer (5), which is located on a side surface of the focus forming layer (4), wherein glass beads (3) are clamped between the clamping layer (2) and the focus forming layer (4), part of each glass bead (3) being located in the clamping layer (2) and the other part of the glass bead (3) being located in the focus forming layer (4), and the specular reflection layer (5) is provided with an anti-counterfeiting pattern. With this structure and the manufacturing method, the anti-counterfeiting reflector plate can be easily observed and difficult to copy.

## Description

### TECHNICAL FIELD

The present application relates to a reflective material, in particular to an anti-counterfeit reflective sheet and a manufacturing method therefor.

### BACKGROUND

The Patent Literature CN100392470C, entitled "Sheeting with Composite Image That Floats" filed by 3M Innovative Properties Company, provides a sheeting. In this Patent, images are formed by applying radiation to the radiation sensitive material layer. The composite image provided by the sheeting floats above or below the sheeting, or the composite image floats both above and below the sheeting. The composite image may be two-dimensional or three-dimensional. The sheeting comprises at least one layer of micro lens, the layer of micro lens having first and second sides; and a layer of material disposed adjacent the first side of the layer of micro lens. The image of the material floats above or below the sheeting. One composite image may be generated from many images.

The composite image of the sheeting described above is only a two-dimensional or three-dimensional image. Unlike some sheeting of holographic images, the imaged sheeting of the above-mentioned Patent cannot be used to produce a replica of itself. Additionally, such images *per se* are not very fine and are difficult to achieve consistency when making them. In other words, the above images are easily counterfeited, and it is even difficult to identify the authenticity of the products after being counterfeited.

The Patent Literature US5712731A provides a security sheet. Micro printed pattern is provided underneath the two-dimensional array. The pattern needs to be lithographically or intaglio printed, and needs to be magnified for observation by a corresponding spherical micro lens. Reflective sheets are widely used in vehicle license plates, road signs, and authentication labels for their excellent night visibility. However, there are many counterfeit products of reflective sheets in the market. Many researchers have been studying reflective sheets with various anti-counterfeiting techniques or have applied some anti-counterfeiting techniques to prevent counterfeits of reflective sheets. Nevertheless, some reflective sheets with anti-counterfeiting techniques have still been counterfeited because of their simple anti-counterfeiting techniques. Or, some anti-counterfeit products of reflective sheets require special equipment or skills to identify. Therefore, there is a need for an anti-counterfeit reflective sheet that is easy to identify and difficult to counterfeit.

Reflective sheets, in particular anti-counterfeit reflective sheets, have already been proposed in many patents, which will be described in detail below. The structures disclosed in the following patent literatures are all distinct from that of the present application and are relatively not easy to observe and identify the patterns.

The specification of the Patent Literature US4650283A discloses retroreflective sheeting, which are a thin layer comprising a monolayer of transparent microspheres partially embedded in a binder layer and a specular reflective layer covering the back surfaces of the microspheres. In the retroreflective sheeting with the thin layer, the binder layer is light-colored. Several of the microspheres have tiny cavities, each cavity opening through the back surface of a microsphere, and at least some of the openings are smaller than the depth of the cavity that is viewable from the front of the sheeting only across a conical field of view.

The sheets described in the specification of the Patent Literature US4688894A and in the specification of the Patent Literature US4691993A are a substantially transparent sheet comprising a monolayer of micro lens and a partially light transmissive mirror disposed behind the rear surfaces of at least some of the micro lens, where the areas occupied by the mirror have bright retroreflectivity under retroreflective viewing conditions, there are axial markings in the rear of or on the rear surfaces of at least some of the micro lens, and the markings together are visible as an image across a predetermined conical field of view in ordinary diffuse lighting conditions.

The specification of the Patent Literature US4708920A discloses a sheet containing integrated-directional images, comprising: (a) a monolayer of closely spaced transparent micro lens, (b) a means for supporting the micro lens in the monolayer, and (c) a set of axial markings of substantially equal size, the set of axial markings being visible throughout a selected conical field of view as an integrated-directional, halftone image having gradations of light and dark areas, and each marking located at the rear of a micro lens in some part in a form that each of the dots of the halftone image having gradations leastwise has the same dimension as the diameter of the micro lens.

The specification of the Patent Literature US4714656A discloses a sheet, which is a contour-dependent, directionally imaged sheet comprising: (a) a monolayer of closely spaced transparent micro lens, (b) means for securing the micro lens to the sheet in a monolayer arrangement; and (c) a set of axial markings, each axial marking being located at the rear of a micro lens such that the set of the axial markings is visible from the front of the sheeting as an intact image only when the sheet is in substantially a predetermined nonplanar contour and is viewed within a predetermined conical field of view.

Therefore, how to manufacture an anti-counterfeit reflective sheet that is easy to observe and difficult to counterfeit with a relatively simple manufacturing process is one of the problems to be solved.

### SUMMARY

In view of the above, the present application is intended to address the technical problem of how to achieve an anti-counterfeit reflective sheet that is easily observed and not easily counterfeited.

To address the above technical problem, according to one embodiment of the present application, there is provided an anti-counterfeit reflective sheet, comprising a surface protective layer; an interposing layer located on a side face of the surface protective layer; a focus-forming layer located on a side face of the interposing layer; and a specular reflective layer located on a side face of the focus-forming layer, wherein a plurality of glass beads are sandwiched between the interposing layer and the focus-forming layer, a portion of the glass beads being located in the interposing layer and the other portion of the glass beads being located in the focus-forming layer, and wherein the specular reflective layer is provided thereon with an anti-counterfeit pattern.

With regard to the above anti-counterfeit reflective sheet, in a possible implementation, the surface protective layer, the interposing layer, and the focus-forming layer are all formed of a film-like resin with light transmittance, and the specular reflective layer is a metallic reflective film.

With regard to the above anti-counterfeit reflective sheet, in a possible implementation, the surface protective layer is colorless and transparent.

With regard to the above anti-counterfeit reflective sheet, in a possible implementation, the surface protective layer, the interposing layer, and the focus-forming layer are colored by a colorant with light transmittance.

With regard to the above anti-counterfeit reflective sheet, in a possible implementation, more than half of a thickness of the glass bead is in the interposing layer.

With regard to the above anti-counterfeit reflective sheet, in a possible implementation, 75% of the thickness of the glass beads is in the interposing layer.

With regard to the above anti-counterfeit reflective sheet, in a possible implementation, a filling rate of the glass beads in the interposing layer is 60% or more.

With regard to the above anti-counterfeit reflective sheet, in a possible implementation, a diameter of the glass beads is greater than or equal to 10 um and less than or equal to 200 um, and a refractive index of the glass beads is greater than or equal to 1.8 and less than or equal to 2.5.

With regard to the above anti-counterfeit reflective sheet, in a possible implementation, the anti-counterfeit pattern includes miniature characters.

With regard to the above anti-counterfeit reflective sheet, in a possible implementation, a character spacing of miniature characters is greater than or equal to 0.05 mm. In a specific implementation, the character spacing of the miniature characters is greater than or equal to 0.5 mm.

With regard to the above anti-counterfeit reflective sheet, in a possible implementation, the miniature characters have a height of greater than or equal to 0.1 mm and less than or equal to 1 mm.

With regard to the above anti-counterfeit reflective sheet, in a possible implementation, the miniature characters have the height of greater than or equal to 0.2 mm and less than or equal to 0.5 mm.

With regard to the above anti-counterfeit reflective sheet, in a possible implementation, the miniature characters have a width of greater than or equal to 1 um and less than or equal to 1000 um. In a specific implementation, the width of the miniature characters is greater than or equal to 100 um and less than or equal to 1000 um. In a specific implementation, the width of the miniature characters is greater than or equal to 1 um and less than or equal to 200 um.

With regard to the above anti-counterfeit reflective sheet, in a possible implementation, the width of the miniature characters may also be greater than or equal to 200 um and less than or equal to 500 um. In a possible implementation, the width of the miniature characters may also be greater than or equal to 80 um and less than or equal to 120 um.

With regard to the above anti-counterfeit reflective sheet, in a possible implementation, the specular reflective layer has a thickness of greater than or equal to 100 A⁰ and less than or equal to 2800 A⁰.

With regard to the above anti-counterfeit reflective sheet, in a possible implementation, the specular reflective layer has a thickness of greater than or equal to 600 A⁰ and less than or equal to 1800 A⁰.

With regard to the above anti-counterfeit reflective sheet, in a possible implementation, the anti-counterfeit pattern is radiated onto the specular reflective layer by microwave radiation.

With regard to the above anti-counterfeit reflective sheet, in a possible implementation, the anti-counterfeit pattern floats on the specular reflective layer.

To address the above technical problem, according to another embodiment of the present application, there is provided a method for manufacturing an anti-counterfeit reflective sheet, the method comprising: forming an interposing layer on one side face of a surface protective layer; arranging a plurality of glass beads on one side face of the interposing layer opposite to the surface protective layer; forming a focus-forming layer on one side face of the interposing layer having the glass beads arranged thereon; forming a specular reflective layer on one side face of the focus-forming layer opposite to the interposing layer; and forming an anti-counterfeit pattern on the specular reflective layer, wherein a portion of the glass beads is located in the interposing layer and the other portion of the glass beads is located in the focus-forming layer.

Hence the anti-counterfeit reflective sheet comprises a surface protective layer, an interposing layer located on a side face of the surface protective layer, a focus-forming layer located on a side face of the interposing layer, and a specular reflective layer located on a side face of the focus-forming layer; wherein a plurality of glass beads are sandwiched between the interposing layer and the focus-forming layer, with a portion of the glass beads located in the interposing layer and the other portion of the glass beads located in the focus-forming layer; and the specular reflective layer is provided thereon with an anti-counterfeit pattern. Thus, the anti-counterfeit pattern may be observed with the aid of a device such as a camera or a magnifier, and thus the anti-counterfeit pattern is easy to identify; and at the same time, because the anti-counterfeit reflective sheet is provided with an anti-counterfeit pattern that is hard to counterfeit, the anti-counterfeit reflective sheet is not easily counterfeited. As a result, it is possible to achieve an anti-counterfeit reflective sheet that is easily observed and not easily counterfeited. Moreover, compared with the prior arts, the present application could form an anti-counterfeit pattern (which may be hidden in a reflective layer) in a radiation way, which is more environmentally friendly compared with conventional printing methods. Additional features and aspects of the present application will become clear from the following detailed description of exemplary embodiments with reference to the attached drawings.

### BRIEF DESCRIPTION OF THE DRAWINGS

The drawings, which are incorporated in and constitute part of the specification, show the exemplary embodiments, features and aspects of the present application, and are used to explain the principle of the present application together with the specification.
FIG. 1 shows a cross-sectional schematic diagram of an anti-counterfeit reflective sheet according to one embodiment of the present application.
FIG. 2 shows a scanning diagram of an anti-counterfeit reflective sheet according to one embodiment of the present application.
FIG. 3 shows a schematic diagram of a dot grating plate according to one embodiment of the present application.
FIG. 4 shows a flowchart of a manufacturing method for an anti-counterfeit reflective sheet according to one embodiment of the present application.

The numerals appearing in the drawings are briefly described as follows:
1: surface protective layer; 2: interposing layer; 3: glass beads; 4: focus-forming layer; 5: specular reflective layer; 5-1: miniature characters on reflective layer; 11: dot grating plate; 12: retroreflective sheet; 13: miniature characters on reflective layer; S410 to S450: steps.

### DETAILED DESCRIPTION

Various exemplary embodiments, features and aspects of the present application will be described in detail with reference to the drawings. The same reference numerals in the drawings represent parts having the same or similar functions. Although various aspects of the embodiments are shown in the drawings, it is unnecessary to proportionally draw the drawings unless otherwise specified.

Herein the specific term "exemplary" means "used as an example, or embodiment, or explanatory". An "exemplary" embodiment given here is not necessarily construed as being superior to or better than other embodiments.

In addition, numerous details are given in the following specific embodiments for the purpose of better explaining the present application. It should be understood by a person skilled in the art that the present application can still be realized even without some of those details. In some of the examples, methods, means, units and circuits that are well known to a person skilled in the art are not described in detail so that the principle of the present application becomes apparent.

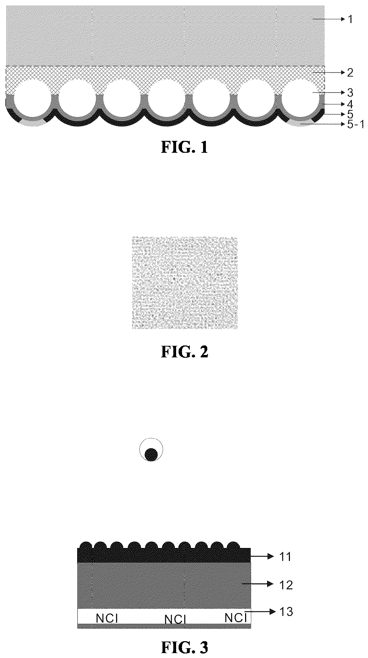

FIG. 1 shows a cross-sectional schematic diagram of an anti-counterfeit reflective sheet according to one embodiment of the present application. FIG. 2 shows a scanning diagram of an anti-counterfeit reflective sheet according to one embodiment of the present application. As shown in FIG. 1, the anti-counterfeit reflective sheet may comprise a surface protective layer 1, an interposing layer 2, a focus-forming layer 4, and a specular reflective layer 5 which are connected in sequence from top to bottom.

Referring to FIG. 1, the interposing layer 2 is located on the side face of the surface protective layer 1, the focus-forming layer 4 is located on the side face of the interposing layer 2, and the specular reflective layer 5 is located on the side face of the focus-forming layer 4. The glass beads 3 are sandwiched between the interposing layer 2 and the focus-forming layer 4, with a portion of the glass beads 3 located in the interposing layer 2 and the other portion of the glass beads 3 located in the focus-forming layer 4. The specular reflective layer 5 is provided thereon with an anti-counterfeit pattern, for example, a miniature character 5-1 on reflective layer.

In this embodiment, the surface protective layer 1 may be formed of a flat film-like resin with light transmittance, e.g., a film-like resin with total light transmittance of more than 80%. The resin forming the surface protective layer 1 may include, but not limited to, acrylic resin, alkyd resin, fluororesin, vinyl chloride resin, polyester, urethane resin, polycarbonate, or a combination of these resins. Further, in terms of weather resistance and processability, acrylic resin, polyester, and vinyl chloride resin are more appropriate than other resins. If factors such as suitability for color application or dispersibility of colorants for coloring are considered, acrylic resin is more appropriate than other resins. In addition, in order to improve other properties of the surface protective layer 1, additives such as UV absorbers, stabilizers, plasticizers, and bridging agents may be added to the resin forming the surface protective layer 1 as needed.

The surface protective layer 1 may be colored (dyed), or may be colorless and transparent. The colorless and transparent surface protective layer 1 is optimal, and the colored (dyed) surface protective layer 1 is also eligible. When the surface protective layer 1 is colored, the colorant is not particularly limited if it is light transmissive, and the surface protective layer 1 may be colored with a pigment-based or dye-based colorant.

Pigment-based or dye-based colorants suitable for coloring the surface protective layer 1 may include, but not limited to, yellow colorants, red colorants, blue colorants, green colorants, tawny colorants, orange colorants, white colorants, and black colorants.

Among them, yellow colorants may include, but not limited to, isoindolone-, isoindoline-, quinphthalone-, anthraquinone-, pyrazolone-, flavanthrone-, benzimidazolone-, and nickel azo-based colorants. Red colorants may include, but not limited to, anthraquinone-, perylene-, quinacridone-, and indigo-based colorants. Blue colorants may include, but not limited to, phthalocyanine-, vat dye-, anthraquinone-, and cobalt-based colorants. Green colorants may include, but not limited to, phthalocyanine-, emerald-, chromium oxide-, and cadmium-based colorants.

For tawny colorants, if they are monochromatic colorants, ferric oxide-based colorants may be used. Certainly, it is also possible to use an isoindolone-based yellow colorant, a perylene-based colorant, and a phthalocyanine-based blue colorant in combination as a tawny colorant.

For orange colorants, if they are monochromatic colorants, anthraquinone-, pyrazolone-, perinone-, perylene-, or quinacridone-based colorants may be used. Certainly, it is also possible to use an isoindolone-based yellow colorant and a perylene-based red colorant in combination as an orange colorant.

White colorants may include, but not limited to, phthalein-, zinc-, and plumbum-based colorants. Black colorants may include, but not limited to, carbon black-, nigrosine-, perylene black-, and titanium black-based colorants.

In this embodiment, the interposing layer 2 may also be formed of a film-like resin with light transmittance. In other words, the resin forming the surface protective layer 1 may also be used to form the interposing layer 2. The interposing layer 2 is fixed on the surface protective layer 1. Optionally, pigment- or dye-based colorants suitable for coloring the surface protective layer 1 are also suitable for coloring the interposing layer 2. The surface protective layer 1 and the interposing layer 2 may be colored by the same method.

Referring to FIG. 1, glass beads 3 are arranged on the side face of the interposing layer 2 opposite to the surface protective layer 1. With the center slightly enters into the interposing layer 2, the glass beads 3 are fixed and clamped by the interposing layer 2. Therefore, the portion slightly larger than half of the surface of the glass beads 3 is covered by the interposing layer 2, and the portion slightly smaller than half of the surface of the glass beads 3 is exposed outside the interposing layer 2. That is to say, more than half of the thickness of the glass beads 3 is in the interposing layer 2. In a possible implementation, 75% of the thickness of the glass beads 3 is in the interposing layer 2.

If the densest filling rate is taken as 100%, the filling rate of the glass beads 3 in the interposing layer 2 may be 60% or more. This is because the anti-counterfeiting effect can be more fully exerted by allowing the filling rate of the glass beads 3 in the interposing layer 2 to be 60% or more.

In a possible implementation, the diameter of the glass beads 3 may be greater than or equal to 10 um and less than or equal to 200 um, and the reflective index of the glass beads 3 may be greater than or equal to 1.8 and less than or equal to 2.5. The coefficient of retroreflection can thus be guaranteed.

Referring to FIG. 1, the face exposing the side face of the glass beads 3 opposite to the interposing layer 2 is covered by the focus-forming layer 4, and the focus-forming layer 4 is fixed by the glass beads 3. Exemplarily, the resin forming the focus-forming layer 4 may be heated, and the glass beads 3 are dispersed on the resin before the resin is fully cured and then settled by virtue of the weight. The glass beads 3 may be secured in the focus-forming layer 4.

The focus-forming layer 4 is a layer for adjusting the distance from the surface of the glass beads 3 to the specular reflective layer 5. The focus-forming layer 4 may also be formed of a film-like resin with light transmittance. In other words, the resin forming the surface protective layer 1 may also be used to form the focus-forming layer 4. Optionally, pigment- or dye-based colorants suitable for coloring the surface protective layer 1 are also suitable for coloring the focus-forming layer 4. The surface protective layer 1 and the focus-forming layer 4 may be colored by the same method.

That is, pigment- or dye-based colorants suitable for coloring the surface protective layer 1 are also suitable for coloring the interposing layer 2 and the focus-forming layer 4. The surface protective layer 1, the interposing layer 2, and the focus-forming layer 4 may be colored by the same method.

Referring to FIG. 1, the specular reflective layer 5 is formed on the side face of the focus-forming layer 4. The specular reflective layer 5 is a layer formed of aluminum, silver, or an additional metal. In terms of the cost-performance ratio, aluminum is generally used as a reflective layer. Accordingly, the specular reflective layer 5 is a metallic reflective film.

In a possible implementation, the specular reflective layer 5 may be formed by vacuum evaporation or sputtering. The side face of the specular reflective layer 5 facing the glass beads 3 is separated from the surface of the glass beads 3 by the focus-forming layer 4 at a certain distance and faces each other, and a reflection region is formed on the surface of the specular reflective layer 5.

In a possible implementation, the thickness of the specular reflective layer 5 may be greater than or equal to 100 A⁰ (angstrom) and less than or equal to 2800 A⁰. In a possible implementation, the thickness of the specular reflective layer 5 is greater than or equal to 600 A⁰ and less than or equal to 1800 A⁰.

In this embodiment, an anti-counterfeit pattern is formed on the specular reflective layer 5, and the anti-counterfeit pattern includes, but is not limited to, miniature characters and patterns. Referring to FIG. 1, the anti-counterfeit pattern provided on the specular reflective layer 5 includes a miniature character 5-1. The miniature character 5-1 is hidden in a pattern or character that can be observed by naked eyes. Usually, the hidden miniature character 5-1 cannot be read by naked eyes under natural light, and there is a need to magnifying the anti-counterfeit pattern with the aid of a device such as a camera or a magnifying glass, so that the miniature character 5-1 can be observed. Certainly, a spherical micro lens may also be used to magnify the anti-counterfeit pattern to make the miniature character 5-1 observable. It should be appreciated that in the case where the miniature character 5-1 is a film and is not stuck to an opaque material, the miniature character 5-1 may be viewed by light transmission. When the anti-counterfeit pattern is observed with a spherical micro lens, the observed miniature character 5-1 floats three-dimensionally, and the miniature character 5-1 can be observed within the 180° field of view.

In a possible implementation, the information contained in the anti-counterfeit pattern may be consistent with the information contained in the two-dimensional code on the corresponding product. In this way, the corresponding information may be acquired by scanning the two-dimensional code, and the information of the anti-counterfeit pattern is enlarged and observed by means of a device such as a camera or a magnifying glass, and whether the two pieces of information are consistent is determined. If they are consistent, it is determined that the anti-counterfeit reflective sheet is genuine; otherwise, it is determined that the anti-counterfeit reflective sheet is counterfeit. In a possible implementation, the anti-counterfeit pattern may be observed from the front of the film or from the back of the film.

In a possible implementation, the ratio of the thickness of the specular reflective layer 5 provided with an anti-counterfeit pattern to the thickness of the specular reflective layer 5 without an anti-counterfeit pattern is less than or equal to 80%. Preferably, the ratio may be between 0.01% and 10%. The thickness of the specular reflective layer 5 may be measured by an aluminum film thickness gauge. The anti-counterfeit pattern may include miniature characters that have an anti-counterfeiting effect.

The miniature character 5-1 may be hidden in a character visible to the eye. The image of the miniature character 5-1 may be an Arabic numeral, an English letter, a Chinese character, a language of other countries, or an additional image such as a triangle, a square, a circle, a car shape or any combination thereof.

The miniature character 5-1 containing a special character may be set according to scenarios. The special character includes, but is not limited to, e.g., information such as the date of production, manufacturer, and batch number of the product, and these pieces of information may be associated with the license plate number, house number, identification number, etc. It is thus possible to achieve an anti-counterfeiting effect.

The miniature character 5-1 may be hidden and the hidden miniature character 5-1 may be printed as soon as it is set. Moreover, the hidden miniature character may be stored in the big data along with the information such as the date of production, manufacturer, and batch number of the product, and customer' license plate number, house number, and identification number. The customer may check whether the information is consistent based on the big data to thereby determine whether the anti-counterfeit reflective sheet is counterfeit. Of note, the term "print" used herein is not the ordinary printing as described in Patent Literature US5712731A, but refers to marking or etching by means of radiation such as computer laser. By forming an anti-counterfeit pattern in the form of a miniature character through radiation rather than ordinary printing, this embodiment could also manufacture anti-counterfeit sheets that are easily observed and not easily counterfeited by a relatively simple manufacturing process under the condition of reducing environmental pollution. However, none of the prior arts takes account of the above multiple aspects when designing products.

Therefore, this embodiment may provide an image with a hidden micro character (miniature character). This image may be observed by using a camera function such as a mobile phone or by fluoroscopy. Or, the image may be confirmed by the dot grating plate 11 shown in FIG. 3. Exemplarily, the dot grating plate 11 may be placed with its dots upwards on a 10mm square watermark with the characters "NCI" hollowed out, and the NCI image (miniature characters 13 on the reflective layer) floating on the anti-counterfeit reflective sheet 12 can be seen through the dot grating plate 11. When observed with the eyes, the "NCI" is a three-dimensional virtual image, and the character is always observed at any position above and moves with the line of sight. The patterns are arranged in such a way that if the position of a certain pattern is (x:0, y:0), the subsequent pattern arrangement is x=y. Therefore, the anti-counterfeit pattern of the anti-counterfeit reflective sheet of this embodiment may be confirmed by simple confirmation means and tools.

In a specific implementation, the miniature character 5-1 may be viewed at a special angle, but the miniature character 5-1 cannot be viewed at angles other than the set special angle. The special angle is, for example, any angle between 5° and 355°. Exemplarily, the special angle may be set between 3° and 90°, and in order to achieve a better anti-counterfeiting effect, the special angle may be set between 5° and 15°.

In this embodiment, the anti-counterfeit pattern is hidden in a visually visible pattern. The anti-counterfeit pattern may be included in a set image of two or more individual images that are not exactly the same in size, a directly visually visible region of at least one larger sized individual image forming the set image has a conical dimension with the individual image as a fixed point, and the other individual images in the set image are directly visually invisible.

In a specific implementation, in the event of being observed with a daily optical electronic device, a combination of the other individual images in the set image and the at least one larger sized individual image is visually recognizable.

Referring to FIG. 3, under natural light, an observer can visually view the large "NCI" pattern only at the special angle or in the special angle range. In case of using tools such as a magnifier, a microscope, and a camera (which are daily optical electronic devices accessible in daily life, as compared with a spherical micro lens), it is possible to observe the small "NCI" in the large "NCI" pattern, and the small "NCI" may be one or more "NCIs" or may be any combination of, e.g., "123 ..." and "ABC ...". That is to say, the small "NCI" in the large "NCI" pattern cannot be observed without the magnification function or very good eyesight and careful observation.

In a possible implementation, the miniature character 5-1 may be assembled by radiation points with the diameter of about 0.05 mm, and then N micro characters are assembled into information such as a pattern or character. In general, only a pattern or character assembled by N micro characters is visible to the naked eye, while the micro characters need to be magnified and observed with the aid of a tool such as a camera or a magnifier.

In this embodiment, points are assembled into a line, lines outline a miniature character, and then N miniature characters are assembled into a pattern or character visible to the naked eyes, thereby forming an anti-counterfeit pattern.

In a possible implementation, the anti-counterfeit pattern may or may not float on the specular reflective layer. In this embodiment, a floating miniature character may be seen under normal natural light. It should be appreciated that the anti-counterfeit pattern are formed by many dot sets and the retro reflection of the glass beads 3 is utilized. So the angle of the dots is fixed when the light waves radiate. When observing with the naked eyes, with the movement of the eyes, the dot sets can only be seen at a special angle because the angle is stationary. Therefore, the dot sets are visible within the sets of angles and invisible beyond the sets of angles. Such a difference creates a sense of floating, so that a floating character can be seen. Certainly, it is also possible to see a character that does not float.

In a possible implementation, the anti-counterfeit pattern may be radiated onto the specular reflective layer 5 by microwave radiation, so as to provide the anti-counterfeit pattern on the specular reflective layer 5. The anti-counterfeit pattern may be produced by vector software, and then the produced anti-counterfeit pattern is output, namely, radiating the produced anti-counterfeit pattern to the specular reflective layer 5 by means of microwave radiation. The radiation power of the microwave radiation may be set between 5% and 100%, and the pulse distance of the microwave radiation may be set between 0.01 mm and 0.2 mm, for example, the pulse distance of the microwave radiation may be set between 0.01 mm and 0.1 mm. When producing the anti-counterfeit pattern, the length of the anti-counterfeit pattern may be set between 0.1 mm and 1 mm, and the line thickness of the anti-counterfeit pattern may be set between 0.01 mm and 1 mm.

In a possible implementation, the microwave radiation may be conducted by any one of optical fiber, carbon dioxide, infrared, end pump infrared, green light, and ultraviolet light. The wavelength of the light used for radiation is between 200 nm and 1200 nm.

In a possible implementation, the character spacing of the miniature characters is greater than or equal to 0.05 mm. If the character spacing of the miniature characters is less than 0.05 mm, the overall effect of the anti-counterfeit reflective sheet will be affected.

In a possible implementation, the height of the miniature character may be greater than or equal to 0.1 mm and less than or equal to 1 mm, for example, the height of the miniature character may be greater than or equal to 0.2 mm and less than or equal to 0.5 mm.

In a possible implementation, the thickness of the lines outlining the miniature character may be greater than or equal to 0.05 mm and less than or equal to 0.15 mm.

In a possible implementation, the width of the miniature character may be greater than or equal to 1 um and less than or equal to 200 um, for example, the width of the miniature characters may be greater than or equal to 80 um and less than or equal to 120 um.

In a possible implementation, the width of the miniature character may be greater than or equal to 0.1 mm and less than or equal to 1 mm, for example, the width of the miniature character may be greater than or equal to 0.2 mm and less than or equal to 0.5 mm. In a specific implementation, the width of the miniature character may be the same as its height.

Based on this embodiment, the anti-counterfeit reflective sheet comprises a surface protective layer, an interposing layer located on a side face of the surface protective layer, a focus-forming layer located on a side face of the interposing layer, and a specular reflective layer located on a side face of the focus-forming layer, where glass beads are sandwiched between the interposing layer and the focus-forming layer, with a portion of the glass beads located in the interposing layer and the other portion located in the focus-forming layer; and an anti-counterfeit pattern is provided on the specular reflective layer. Therefore, the anti-counterfeit pattern may be observed with the aid of a daily optical electronic device such as a camera or a magnifier, and thus the anti-counterfeit pattern is easy to identify. At the same time, since the anti-counterfeit reflective sheet is provided with the anti-counterfeit pattern that is not easily counterfeited, the anti-counterfeit reflective sheet is not easily counterfeited. As a result, it is possible to achieve an anti-counterfeit reflective sheet that is easily observed and not easily counterfeited.

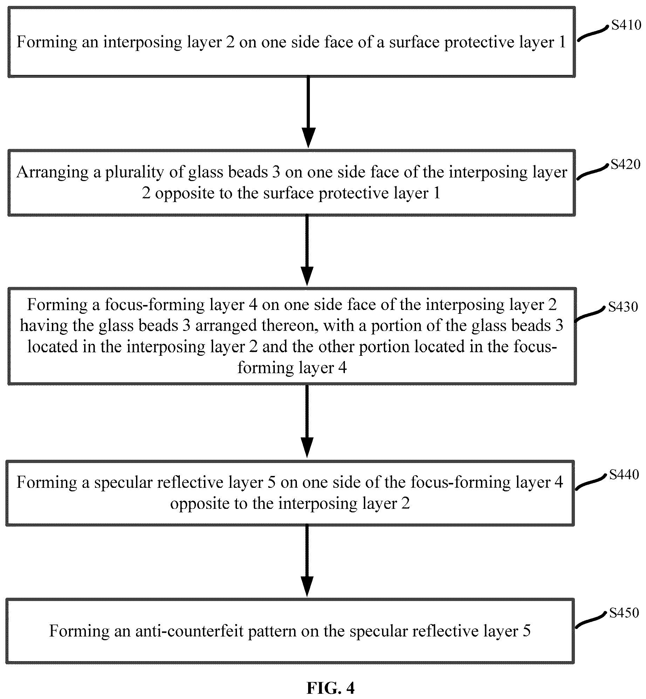

FIG. 4 shows a flowchart of a manufacturing method for an anti-counterfeit reflective sheet according to one embodiment of the present application. As shown in FIG. 4, the manufacturing method may comprise the steps below.

In step S410, an interposing layer 2 is formed on one side face of a surface protective layer 1.

In this embodiment, a resin compounding solution for forming the surface protective layer 1 may be formulated, and the resin compounding solution is coated on the engineering substrate film and dried, to form the surface protective layer 1 with a certain thickness.

In step S420, glass beads 3 are arranged on one side face of the interposing layer 2 opposite to the surface protective layer 1.

In this embodiment, a resin compounding solution for forming the interposing layer 2 may be formulated, and the resin compounding solution is coated on the surface protective layer 1 and dried, to form the interposing layer 2 with a certain thickness.

In step S430, a focus-forming layer 4 is formed on one side face of the interposing layer 2 having the glass beads 3 arranged thereon, a portion of the glass beads 3 is located in the interposing layer 2, and the other portion of the glass beads 3 is located in the focus-forming layer 4.

In this embodiment, a resin compounding solution for forming a focus-forming layer 4 may be formulated, and the resin compounding solution is coated on the surface protective layer 1 and the glass beads 3 and dried, to form the focus-forming layer 4 with a certain thickness. In addition, the glass beads 3 may be attached to the interposing layer 2 and subjected to heat treatment, so that the glass beads 3 are immersed in the interposing layer 2 in such a manner that the glass beads 3 are exposed from the interposing layer 2, and approximately 75% of the diameter of the glass beads 3 is held in the interposing layer 2.

In step S440, a specular reflective layer 5 is formed on one side of the focus-forming layer 4 opposite to the interposing layer 2.

In this embodiment, aluminum may be vacuum evaporated on the focus-forming layer 4 to thereby obtain the specular reflective layer 5.

In step S450, an anti-counterfeit pattern is formed on the specular reflective layer 5.

In this embodiment, the anti-counterfeit pattern may be microwave radiated onto the specular reflective layer 5 to thereby obtain the specular reflective layer 5 with an anti-counterfeit pattern.

Next, the engineering substrate may be peeled off to thereby obtain an anti-counterfeit reflective sheet.

Hence the anti-counterfeit reflective sheet in this embodiment is simple to manufacture, and the manufacturing method can reduce environmental pollution due to nonuse of conventional printing inks, printing rollers, etc., and can reduce carbon emission as it dispenses with re-platemaking and inks.

The foregoing descriptions are merely specific embodiments of the present application, but the scope of protection for the present application is not limited thereto. Any variations or substitutions readily occurring to those skilled in the art within the technical scope disclosed herein shall be encompassed in the scope of protection for the present application. Therefore, the scope of protection for the present application shall be subject to that for the claims.

## Claims

1. An anti-counterfeit reflective sheet, comprising:
a surface protective layer;
an interposing layer located on a side face of the surface protective layer;
a focus-forming layer located on a side face of the interposing layer; and
a specular reflective layer located on a side face of the focus-forming layer,
wherein a plurality of glass beads are sandwiched between the interposing layer and the focus-forming layer, a portion of the glass beads being located in the interposing layer and the other portion of the glass beads being located in the focus-forming layer, and
wherein the specular reflective layer is provided thereon with an anti-counterfeit pattern, and the anti-counterfeit pattern being hidden in a visible-by-eyesight pattern.

2. The anti-counterfeit reflective sheet according to claim 1, wherein the surface protective layer, the interposing layer, and the focus-forming layer are all formed of a film-like resin with light transmittance, and the specular reflective layer is a metallic reflective film.

3. The anti-counterfeit reflective sheet according to claim 1, wherein the surface protective layer is colorless and transparent.

4. The anti-counterfeit reflective sheet according to claim 1, wherein the surface protective layer, the interposing layer, and the focus-forming layer are colored by a colorant with light transmittance.

5. The anti-counterfeit reflective sheet according to claim 1, wherein more than half of a thickness of the glass beads is in the interposing layer.

6. The anti-counterfeit reflective sheet according to claim 5, wherein 75% of the thickness of the glass beads is in the interposing layer.

7. The anti-counterfeit reflective sheet according to claim 1, wherein a filling rate of the glass beads in the interposing layer is 60% or more.

8. The anti-counterfeit reflective sheet according to claim 1, wherein the glass beads have a diameter of greater than or equal to 10 um and less than or equal to 200 um, and the glass beads have a refractive index of greater than or equal to 1.8 and less than or equal to 2.5.

9. The anti-counterfeit reflective sheet according to claim 1, wherein the anti-counterfeit pattern includes miniature characters.

10. The anti-counterfeit reflective sheet according to claim 9, wherein a character spacing of the miniature characters is greater than or equal to 0.5 mm.

11. The anti-counterfeit reflective sheet according to claim 9, wherein the miniature characters have a height of greater than or equal to 0.1 mm and less than or equal to 1 mm.

12. The anti-counterfeit reflective sheet according to claim 11, wherein the miniature characters have the height of greater than or equal to 0.2 mm and less than or equal to 0.5 mm.

13. The anti-counterfeit reflective sheet according to claim 9, wherein the miniature characters have a width of greater than or equal to 1 um and less than or equal to 200 um.

14. The anti-counterfeit reflective sheet according to claim 13, wherein the miniature characters have the width of greater than or equal to 80 um and less than or equal to 120 um.

15. The anti-counterfeit reflective sheet according to claim 1, wherein the specular reflective layer has a thickness of greater than or equal to 100 A⁰ and less than or equal to 2800 A⁰.

16. The anti-counterfeit reflective sheet according to claim 15, wherein the specular reflective layer has the thickness of greater than or equal to 600 A⁰ and less than or equal to 1800 A⁰.

17. The anti-counterfeit reflective sheet according to any one of claims 1 to 16, wherein the anti-counterfeit pattern is radiated onto the specular reflective layer by microwave radiation.

18. The anti-counterfeit reflective sheet according to any one of claims 1 to 16, wherein the anti-counterfeit pattern floats on the specular reflective layer.

19. The anti-counterfeit reflective sheet according to any one of claims 1 to 16, wherein the anti-counterfeit pattern is included in a set image of two or more individual images, the two or more individual images are not exactly same in size, a directly visible-by-eyesight region of at least one larger-sized individual image forming the set image has a conical dimension with the individual image as a vertex, and other individual images in the set image are directly invisible-by-eyesight.

20. The anti-counterfeit reflective sheet according to claim 19, wherein in the case of being observed with a daily optical electronic device, a combination of other individual images in the set image and the at least one larger sized individual image is visually recognizable.

21. A method for manufacturing an anti-counterfeit reflective sheet, comprising:
forming an interposing layer on one side face of a surface protective layer;
arranging a plurality of glass beads on one side face of the interposing layer opposite to the surface protective layer;
forming a focus-forming layer on one side face of the interposing layer having the glass beads arranged thereon;
forming a specular reflective layer on one side face of the focus-forming layer opposite to the interposing layer; and
forming an anti-counterfeit pattern on the specular reflective layer,
wherein a portion of the glass beads is located in the interposing layer and the other portion of the glass beads is located in the focus-forming layer.
